# EUROPÄISCHE PATENTSCHRIFT

(11) **EP 3 371 070 B1**
(45) Veröffentlichungstag und Bekanntmachung des Hinweises auf die Patenterteilung: **06.01.2021**
(21) Anmeldenummer: 16831477.1
(22) Anmeldetag: 04.11.2016
(51) Int. Cl.: B65D 43/02

(54) **SCHNAPPDECKEL IN MEHRKOMPONENTEN-SPRITZGUSSTECHNIK**
SNAP-FIT LID PRODUCED BY MULTI-COMPONENT INJECTION MOULDING
COUVERCLE ENCLIQUETABLE FABRIQUÉ PAR UNE TECHNIQUE DE MOULAGE PAR INJECTION À PLUSIEURS COMPOSANTS

(30) Priorität: 06.11.2015 DE 202015105951 U
(43) Veröffentlichungstag der Anmeldung: 12.09.2018
(73) Patentinhaber: Kittmann, Roland, 85293 Reichertshausen (DE)
(72) Erfinder: Kittmann, Roland, 85293 Reichertshausen (DE)
(74) Vertreter: Strehl Schübel-Hopf & Partner
(86) Internationale Anmeldenummer: PCT/DE2016/100523
(87) Internationale Veröffentlichungsnummer: WO 2017/076398

(56) Entgegenhaltungen:
- GB-A- 2 395 710
- US-A- 3 559 843
- US-A- 3 782 575
- US-A1- 2012 037 654

## Beschreibung

Seit den 1920er Jahren ist es bekannt, kleine runde Metalldosen mit einem Schnappverschluss herzustellen, der sich durch Druck auf seine Stirnwand in bistabiler Weise öffnen und schließen lässt. Derartige Schnappverschlüsse sind beispielsweise in der Patentschrift DE 442 634 C beschrieben und bestehen aus einer kreisförmigen Stirnwand, die in bistabiler Weise zwischen einem konvexen und einem konkaven Zustand verformbar ist, und einem Randabschnitt aus zinnenförmigen Spreizfingern, die dazu ausgelegt sind, in der Verschluss-Stellung einen Wulst am Außenrand der Metalldose zu umgreifen.

Solche Metalldosen aus Weißblech werden zum Beispiel von der Firma Hoffmann Neopac als Merchandising-Produkte unter den Marken Klick-Klack® bzw. Klipp-Klapp® vertrieben. Eine nähere Beschreibung der Dosen findet sich zum Beispiel in der Patentschrift EP 2 291 315 B1.

Ein Beispiel für eine herkömmliche Lösung, bei der eine bistabil verformbare Metallkappe mit einer flexiblen Kunststoffkomponente umspritzt wird, ist in US 2012/037654 A1 beschrieben. US 3 782 575 A, US 3 559 843 A und GB 2 395 710 A beschreiben weitere herkömmliche Abdeckungen. US 2012/037654 A1 offenbart ferner eine Abdeckung gemäß dem Oberbegriff des Anspruchs 1.

Im Stand der Technik ist noch nicht erkannt und zumindest nicht beschrieben, dass für das Funktionieren des Schnappmechanismus der oben erwähnten Dosenverschlüsse die Übertragung der bistabilen Verformung der Stirnwand auf den angrenzenden ringförmigen Randabschnitt entscheidend ist. Nur wenn die Umklappbewegung zwischen konvexer und konkaver Wölbung der Stirnwand ihre Verformspannungskräfte an den Randabschnitt weitergibt, kann sie zu einem Aufspreizen der Metallzinnen und eine entsprechende Vergrößerung des Außenumfangs der Verschlusskappe führen, die dann auch ein Öffnen der Metalldose erlaubt. Von zentraler Bedeutung ist dabei, dass der am Übergang zwischen Stirnwand und Randabschnitt eingeschlossene Winkel für beide bistabilen Zustände gleich groß ist, d.h. dass das Verschlusskappenmaterial an diesem Übergang steif genug ist, um die Verformung der Stirnwand vollständig an den Randabschnitt weiterzugeben.

Bei den eingangs erwähnten herkömmlichen Metalldosenverschlusskappen wird die erforderliche Materialsteifigkeit im Übergang zwischen Stirnwand und Randabschnitt schon allein dadurch erreicht, dass die Dosenkappe aus einem Stück Blech durch Umbiegen des Randbereichs und Ausstanzen der Metallzinnen geformt ist. Durch die Biegeverhärtung des Materials am Übergang zwischen Stirnwand und Randabschnitt kommt die erforderliche Materialsteifigkeit automatisch zustande.

Nachteilig an den bekannten Klick-Klack-Verschlusskappen ist allerdings, dass sie bislang nur aus Metall, insbesondere aus Weißblech, erhältlich sind. Es besteht generell ein Bedarf für deren Herstellung aus billigeren und leichteren Kunststoffmaterialien. Ferner ist es wünschenswert, derartige Dosen auch so herstellen zu können, dass sie in ihrem geschlossenen Zustand eine Stirnwand mit konkaver Wölbung haben, weil ein unbeabsichtigtes Öffnen dann erschwert ist. Schließlich wäre es wünschenswert, derartige Verschlusselemente möglichst luft- und wasserdicht zu machen, um ihre Einsetzbarkeit über den bisherigen Bereich als Pillendosen hinaus zu erweitern.

Eine zumindest teilweise Lösung der oben erwähnten Aufgabe gelingt durch die Merkmale des beigefügten Anspruchs 1. Die Unteransprüche betreffen bevorzugte Ausführungsformen.

Damit die Herstellung der Verschlusskappen aus Kunststoff gelingt, ist es wichtig, die Erkenntnis zu gewinnen und umzusetzen, dass der Außenumfang des Deckels veränderbar sein muss und gleichzeitig der Winkel am Übergang zwischen Stirnwand und Randabschnitt in beiden bistabilen Stellungen konstant bleiben muss. Bei dem herkömmlichen Dosenverschluss aus Metall wurde die erste dieser Randbedingungen bewusst durch die aufspreizbaren Metallzinnen erfüllt. Die zweite Randbedingung wurde mehr oder weniger zufällig dadurch erfüllt, dass das Weißblechmaterial in diesem Übergangsbereich aufgrund der Biegeverhärtung schon herstellungsbedingt ausreichend steif wird.

Bei einer Herstellung aus einem dünnwandigen Kunststoff würde eine entsprechende Materialbehandlung allerdings nicht zum Erfolg führen. Ein Einschneiden des Randbereichs in Form der herkömmlichen Zinnen würde die Abdeckung zu instabil machen. Außerdem entsteht bei der Herstellung keine Biegeverhärtung wie bei der Metallbearbeitung. Die Randbedingungen müssen also auf andere Weise erfüllt werden.

Dies gelingt erfindungsgemäß dadurch, dass mindestens ein Dehnungsabschnitt im Randabschnitt der Abdeckung aus einem weicheren Material hergestellt ist als der übrige Randabschnitt. Der Dehnungsabschnitt weitet sich unter Spannung elastisch auf und erlaubt ein Aufweiten des Randbereichs im Zustand konkaver Stirnwandkrümmung, während das Basismaterial (d.h. eine erste Materialkomponente) der Abdeckung ansonsten steif genug ist, um den Winkel im Übergangsbereich zwischen Stirnwand und Randabschnitt konstant zu halten. Dies ermöglicht das Umklappen der Abdeckung in den bistabilen Zustand mit dem größeren Außenumfang.

Vorzugsweise wird der Dehnungsabschnitt zusammen mit dem Rest der Abdeckung in einem Stück in einem Mehrkomponenten-Spritzgussverfahren hergestellt. Für den Dehnungsabschnitt wird dann eine zweite Materialkomponente eingespritzt, die weicher und/oder elastischer ist als die für die übrige Abdeckung eingesetzte erste Materialkomponente. Um den konstanten Winkel im Übergangsbereich zwischen Stirnwand und Randabschnitt zu garantieren, soll die Abdeckung in diesem Übergangsbereich ferner eine höhere Materialdicke der härteren (Basis-)Materialkomponente aufweisen als im Hauptbereich der Stirnwand oder aus einer noch härteren dritten Materialkomponente gespritzt werden. Letzeres führt zu dem besonderen Vorteil, dass die Abdeckung insgesamt eine gleichbleibende Materialstärke hat. Eine homogene Dicke ist nicht nur optisch ansprechend, sondern reduziert auch die Anzahl von Stufen und Kanten, in denen sich Schmutz sammeln kann.

Gemäß einem besonders bevorzugten Ausführungsbeispiel weist die Stirnwand ferner ein Griffelement auf, an dem sich die Stirnwand leicht von Hand anheben und eindrücken lässt. Dies ist besonders dann wichtig, wenn das Verschlusselement nicht von außen als Kappe über der zu verschließenden Öffnung sitzt, sondern als Deckel innen in die Seitenwand der zu verschließenden Öffnung eingreift. Im geschlossenen Zustand ließe sich der Deckel dann nämlich ohne passendes Griffelement nicht mehr aus der Öffnung entnehmen. Das Griffelement bringt darüber hinaus den Vorteil mit sich, dass es den Zentrumsbereich der Stirnwand verstärkt, der bei dem Umklapp-Prozess zwischen konvexer und konkaver Stellung ja möglichst steif in seiner horizontalen Ausrichtung bleiben soll.

Besonders bevorzugt ist eine Ausgestaltung der vorliegenden Erfindung, bei der am gesamten Außenumfang des Randabschnitts ein Rastring aus der weicheren zweiten Materialkomponente angespritzt ist. Dieser kann dichtend in eine Nut oder eine Stufe in der Seitenwand der zu verschließenden Öffnung eingreifen, so dass sogar ein dichtender Verschluss der Öffnung möglich ist. Diese Idee einer Abdichtung war bei den herkömmlichen Verschlusskappen aus Metall schon deshalb nicht möglich, weil diese immer außen in Eingriff mit der Metalldose kamen und außerdem die Schlitze zwischen den sternförmig am Randabschnitt angeordneten Metallzinnen eine dichtende Ausgestaltung nicht zugelassen haben.

In der vorliegenden Beschreibung wird das Verschlusselement der zu verschließenden Öffnung allgemein als Abdeckung bezeichnet. Greift die Klemmbefestigung der Abdeckung außen an der Öffnungswand an, so wird die Abdeckung als Kappe bezeichnet; klemmt die Abdeckung hingegen innen gegen die Öffnungswand, so wird sie als Deckel bezeichnet.

Im Folgenden wird die Erfindung anhand von mehreren Ausführungsbeispielen näher erläutert. Darin zeigt:
Fig. 1a eine teilweise im Schnitt dargestellte Seitenansicht eines Verschlussdeckels gemäß einem ersten Ausführungsbeispiel der Erfindung;
Fig. 1b eine Draufsicht auf den Deckel der Fig. 1a;
Fig. 1c eine vergrößerte Detailansicht in einem Schnitt A-A in der Fig. 1a;
Fig. 1d eine vergrößerte Darstellung eines Ausschnitts X der Fig. 1a;
Fig. 1e eine vergrößerte Detailansicht in einem Schnitt C-C in der Fig. 1c;
Fig. 1f eine vergrößerte Detailansicht in einem Schnitt B-B in der Fig. 1c;
Fig. 1g eine Darstellung des Verschlussprinzips einer Öffnung mit dem Deckel gemäß der Detailansicht in Fig. 1e in der entgegengesetzten bistabilen Position;
Fig. 2a eine Querschnittsansicht eines Verschluss-Systems gemäß der vorliegenden Erfindung mit einer Variante der Abdeckung gemäß dem ersten Ausführungsbeispiel in offener Stellung;
Fig. 2b eine Querschnittsansicht des Verschluss-Systems der Fig. 2a in geschlossener Stellung;
Fig. 2c einen vergrößerten Ausschnitt der Fig. 2b;
Fig. 3a eine teilweise im Schnitt dargestellte Seitenansicht einer Verschlusskappe gemäß einem zweiten Ausführungsbeispiel der Erfindung;
Fig. 3b eine Draufsicht auf die Kappe der Fig. 3a;
Fig. 3c eine vergrößerte Detailansicht in einem Schnitt A-A in der Fig. 3a;
Fig. 3d eine vergrößerte Darstellung eines Ausschnitts X der Fig. 3a;
Fig. 3e eine vergrößerte Detailansicht in einem Schnitt C-C in der Fig. 3c;
Fig. 3f eine vergrößerte Detailansicht in einem Schnitt B-B in der Fig. 3c, in der gleichzeitig das Verschlussprinzips einer Öffnung mit der Kappe dargestellt ist;
Fig. 4a eine Querschnittsansicht eines Verschluss-Systems gemäß der vorliegenden Erfindung mit einer Variante der Abdeckung gemäß dem zweiten Ausführungsbeispiel in offener Stellung;
Fig. 4b eine Querschnittsansicht des Verschluss-Systems der Fig. 4a in geschlossener Stellung;
Fig. 4c einen vergrößerten Ausschnitt der Fig. 4b;
Fig. 5a eine teilweise im Schnitt dargestellte Seitenansicht einer Abdeckung gemäß einem dritten Ausführungsbeispiel der Erfindung;
Fig. 5b eine Draufsicht auf die Abdeckung der Fig. 5a;
Fig. 5c eine vergrößerte Detailansicht in einem Schnitt A-A in der Fig. 5a;
Fig. 5d eine vergrößerte Darstellung eines Ausschnitts X der Fig. 5a;
Fig. 5e eine vergrößerte Detailansicht in einem Schnitt C-C in der Fig. 5c; und
Fig. 5f eine vergrößerte Detailansicht in einem Schnitt B-B in der Fig. 5c.

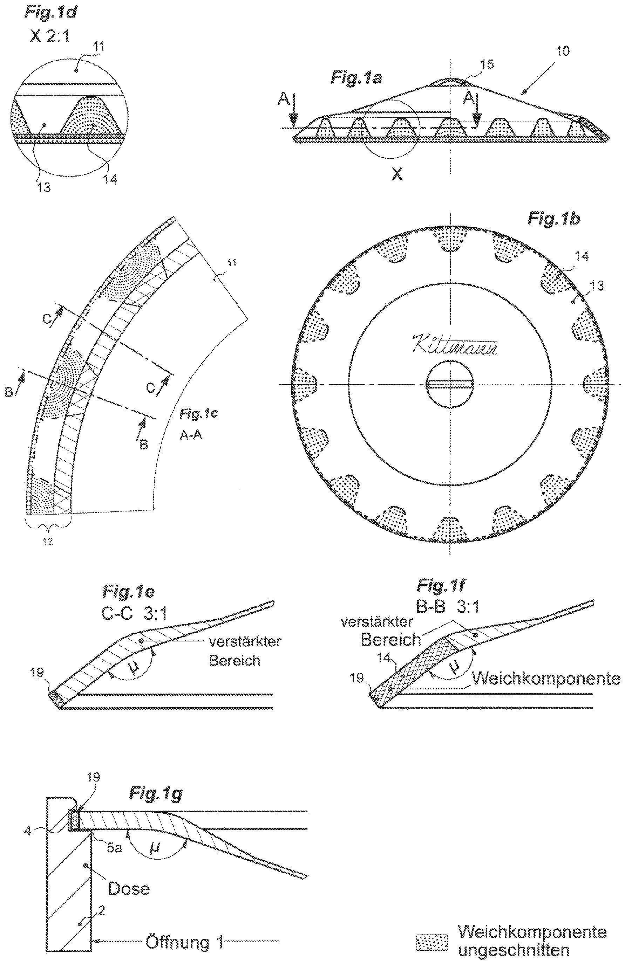

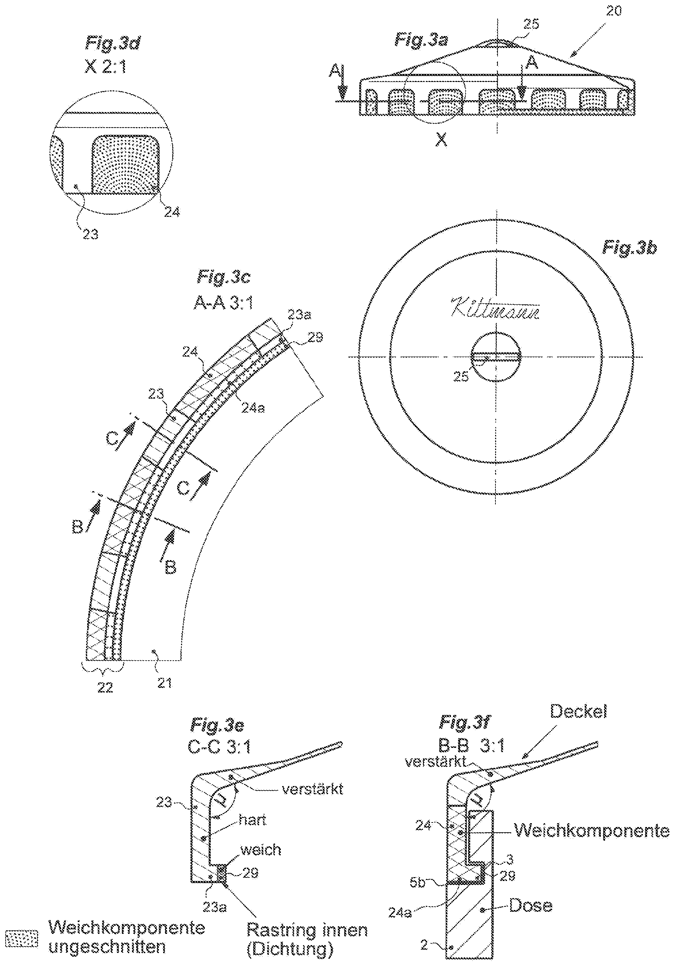

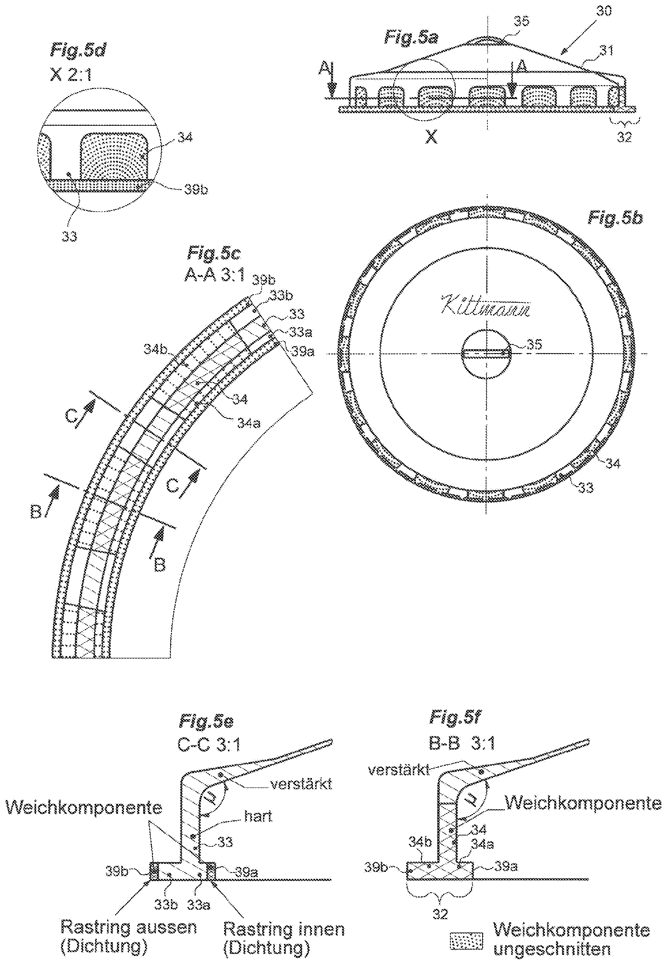

Der in den Figuren 1a-d gezeigte Deckel 10 weist eine Stirnwand 11 von im Wesentlichen kreisförmiger Grundform auf, an deren Umfangsrand ein ringförmiger Randabschnitt 12 angeformt ist. Die Figur 1a zeigt eine teilweise im Schnitt dargestellt Seitenansicht. In der linken Hälfte der Figur ist der Deckel 10 von der Seite zu sehen, während er in der rechten Hälfte innen aufgeschnitten ist, so dass man die hintere Innenseite des Deckels 10 sieht. Gleiches gilt für die später erläuterte Darstellungen der Kappe 20 in der Figur 3a und der Abdeckung 30 in der Figur 5a. Ferner ist in den Figuren immer die ungeschnittene Weichkomponente (zweite Materialkomponente) punktiert und die geschnittene Weichkomponente kreuzschraffiert dargestellt, während die geschnittene Hartkomponente (erste Materialkomponente) einfach schraffiert dargestellt ist.

Der Deckel 10 ist in den Figuren 1a bis 1f in seiner offenen Stellung gezeigt, d.h. die Stirnwand 11 befindet sich, wie in der Figur 1a zu sehen, in ihrem konvexen, nach oben gewölbten bistabilen Zustand. Schnappt die Stirnwand 11 in ihren konkav nach unten (d.h. in Aufsteckrichtung) gewölbten Zustand, so erhöht sich der Außenumfang des Randabschnitts 12, so dass ein radiales Ende des Randabschnitts 12 in Eingriff mit einer Innennut 4 im Wandbereich 2 der zu verschließenden Öffnung 1 gelangen kann, wie es in der Figur 1g gezeigt ist.

Um den Winkel µ, den die Stirnwand 11 und der Randabschnitt 12 in ihrem Übergangsbereich einschließen, in den beiden Stellungen der Figuren 1e und 1g konstant zu halten, sollte das Deckelmaterial über eine ausreichende Steifigkeit verfügen. Dies gelingt erfindungsgemäß dadurch, dass der Übergang zwischen Stirnwand 11 und Randabschnitt 12 wenigstens in Teilabschnitten, vorzugsweise aber über den gesamten Umfang, eine höhere Materialstärke aufweist als der Zentralbereich der Stirnwand 11. Das Material verdickt sich, wie in den Figuren 1e-g gezeigt, nach außen, d.h. entgegen der Aufsteckrichtung, so dass der Übergangsbereich zwischen Stirnwand 11 und Randabschnitt 12 innen glatt verläuft. Die Materialverdickungen können alternativ aber auch nach innen vorspringen und im Deckelinneren zu einem entsprechend konturierten Wandverlauf führen. Dann ist der Übergangsbereich von außen glatt, was zu einem besonders homogenen äußeren Erscheinungsbild führt.

Die Vergrößerung des Außenumfangs im in Fig. 1g gezeigten konkaven bistabilen Zustand gegenüber dem in Fig. 1e gezeigten konvexen Zustand erfordert eine ausreichende Dehnungsflexibilität des umlaufenden Randabschnitts 12. Dies gelingt erfindungsgemäß durch umlaufend (vorzugsweise äquidistant) angeordnete Dehnungsabschnitte 14 aus der weicheren zweiten Materialkomponente, die sich - wie besonders gut in den Figuren 1a-d zu sehen ist - mit Zwischenabschnitten 13 aus der härteren ersten Materialkomponente abwechseln. Wie in der Fig. 1b dargestellt, setzen die Dehnungsabschnitte 14 am Übergangsbereich zwischen Stirnwand 11 und Randabschnitt 12 an und verbreitern sich zum radialen Außenrand hin.

Der Randabschnitt 12 endet sowohl in seinen Dehnungsabschnitten 14 als auch in seinen Zwischenabschnitten 13 in einem umlaufenden Rastring 19, der ebenfalls aus einer weicheren Materialkomponente geformt ist, vorzugsweise der gleichen, wie die Dehnungsabschnitte 14. Dieser umlaufende Rastring 19 verleiht dem dünnwandigen Deckel 10 zusätzliche Formstabilität, ist aber auch ausreichend elastisch, um die Vergrößerung des Außenumfangs in der in der Fig. 1g gezeigten konvexen Umklapp-Position zu ermöglichen. Wegen seiner weicheren Materialbeschaffenheit klemmt der Rastring 19 nicht nur besonders gut in der Innennut 4 der zu verschließenden Öffnungswand 2, sondern kann sogar die Funktion eines Dichtungsrings übernehmen.

Schließlich weist der Deckel 10 noch ein zentrisch an seiner Stirnwand angeformtes Griffelement in Form eines Henkels bzw. Bügels 15. Dieser lässt sich von Hand oder mit einem Haken oder dergleichen sicher und zuverlässig fassen, um den Deckel 10 auf die zu verschließende Öffnung 1 zu stecken und von dieser ohne seitliches Verkanten wieder abzuziehen.

Als Herstellungsverfahren für den Deckel 10 eignet sich das bereits erwähnte Mehrkomponenten-Spritzgießen aus einem oder mehreren thermoplastischen Kunststoffen besonders gut. Durch die Mehrkomponenten-Technik kann für die Stirnwand 11 und die Zwischenabschnitte 13 eine erste (Basis-)Komponente gespritzt werden, während die Dehnungsabschnitte 14 ebenso wie der Rastring 19 aus einer weicheren zweiten Komponente in einem einzigen Herstellungsvorgang direkt angespritzt werden. Auch die optionale dritte (besonders harte) Materialkomponente für den Übergangsbereich zwischen Stirnwand und Randabschnitt kann in einem einzigen Mehrkomponenten-Spritzguss direkt angespritzt werden.

Bevorzugte Materialien für die erste Komponente sind: thermoplastische Elastomere (TPE) und thermoplastisches Urethan (TPU).

Bevorzugte Materialien für die zweite Komponente sind: Polycarbonat (PC), Acrylnitril-Butadien-Styrol (ABS) und Polystyrol (PS).

Bevorzugte Materialien für die dritte Komponente sind: glasfaserverstärktes Polyamid (PA) oder andere glasfaserverstärkte Kunststoffe.

Anstatt die Abdeckung vollständig im Spritzguss herzustellen, kann auch ein vorher separat gefertigter Rohling umspritzt werden. Denkbar ist zum Beispiel, dass wie in US 2012/037654 A1 beschrieben eine Kappe aus Blech oder einem Leichtmetall (z.B. Aluminium), die im Wesentlichen die Form einer herkömmlichen Klick-Klack-Dosenkappe mit den sich aufspreizenden Metallzinnen hat, im Randbereich mit der weicheren (zweiten) Kunststoffkomponente umspritzt wird. So erhält man eine Abdeckung mit wesentlich verbesserter Dichtheit gegen das Austreten von Flüssigkeiten oder Gasen aus der damit zu verschließenden Dose.

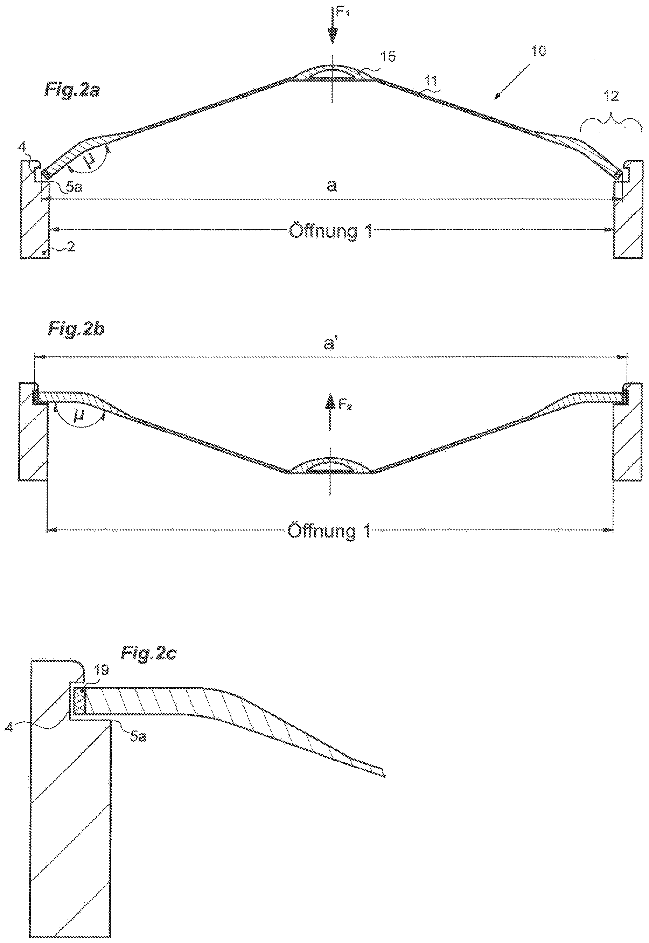

Die Figuren 2a bis 2c zeigen die Funktionsweise eines erfindungsgemäßen Verschluss-Systems, bei dem der Deckel 10 des ersten Ausführungsbeispiels zum Verschließen der Öffnung 1 zum Einsatz kommt. Der Wandbereich 2 der zu verschließenden Öffnung 1 weist innen eine ringförmige Nut 4 auf, in die der Deckel 10 einrasten soll, und die an ihrer Unterkante einen Absatz 5a hat.

Führt man den Deckel 10 von oben in die Öffnung 1 ein, so stößt der Randabschnitt 12 mit dem Rastring 19 gegen den Absatz 5a. Dadurch weiß der Benutzer, dass er die zur Verriegelung vorgesehene axiale Endposition des Deckels 10 erreicht hat. Drückt er nun die Stirnwand 11 nach unten (am besten durch eine vertikal nach unten wirkende Kraft F₁ auf das Griffelement 15), so springt die Stirnwand 11 von ihrem in Figur 2a gezeigten konvexen bistabilen Zustand um in ihren in Figur 2b gezeigten konkaven bistabilen Zustand. Durch die Steifigkeit des Deckelmaterials im Übergangsbereich zwischen Stirnwand 11 und Randabschnitt 12, die vorzugsweise noch durch Materialverdickungen unterstützt wird, bleibt der Winkel µ bei diesem Umspringvorgang konstant, so dass der Randabschnitt 12 leicht seitlich nach außen klappt und einen Druck des Rastrings 19 in die Nut 4 bewirkt. Dabei spannt sich das Material in den Dehnungsabschnitten 14 in einen in Draufsicht verbreiterten Zustand.

Der Außendurchmesser des Randabschnitts 12 vergrößert sich beim Umklappvorgang zwischen Fig. 2a und 2b von a auf a'. Der Rastring 19 drückt bei der konkaver Stirnwandstellung der Figur 2b seitlich von innen in die ringförmige Nut 4 der Öffnungswand 2 und verriegelt so den Deckel 10 in seiner geschlossenen Stellung. In der Figur 2c ist das Eingreifen des Rastrings 19 in die Nut 4 nochmals im Detail dargestellt.

Um die Öffnung 1 wieder freizulegen, zieht man die Stirnwand 11 mit einer Kraft F₂ nach oben (am besten durch Ergreifen des Griffbügels 15), wodurch der Deckel 10 wieder in seinen Ursprungszustand zurückschnappt und durch Verringerung seines Außendurchmessers auf den Wert a wieder aus der Öffnung 1 herausgezogen werden kann.

Besonders vorteilhaft an dem Verschluss-System gemäß den Figuren 2a bis 2c ist, dass der Deckel 10 nicht durch einen Druck von außen auf seine Stirnwand 11 geöffnet werden kann. Anders als noch bei den herkömmlichen Klick-Klack-Dosen wird der Deckel 10 in der Figur 2b bei einem vertikalen Druck auf seine Stirnwand 11 von oben (etwa durch Stöße während des Transports) nicht gelöst. Stattdessen muss die Stirnwand 11 durch gezieltes Nach-oben-Ziehen des Griffbügels 15 aus ihrer Verriegelungsstellung gezogen werden. Dadurch wird die Sicherheit der Abdeckung 10 gegen unbeabsichtigtes Öffnen erhöht. Vorzugsweise kann die Abdeckung 10 vollständig innerhalb eines zu verschließenden Rohrendes liegen, wenn wie in den Figuren 2a-c, die Nut 4 und der Absatz 5a entsprechend weit unten angeordnet sind.

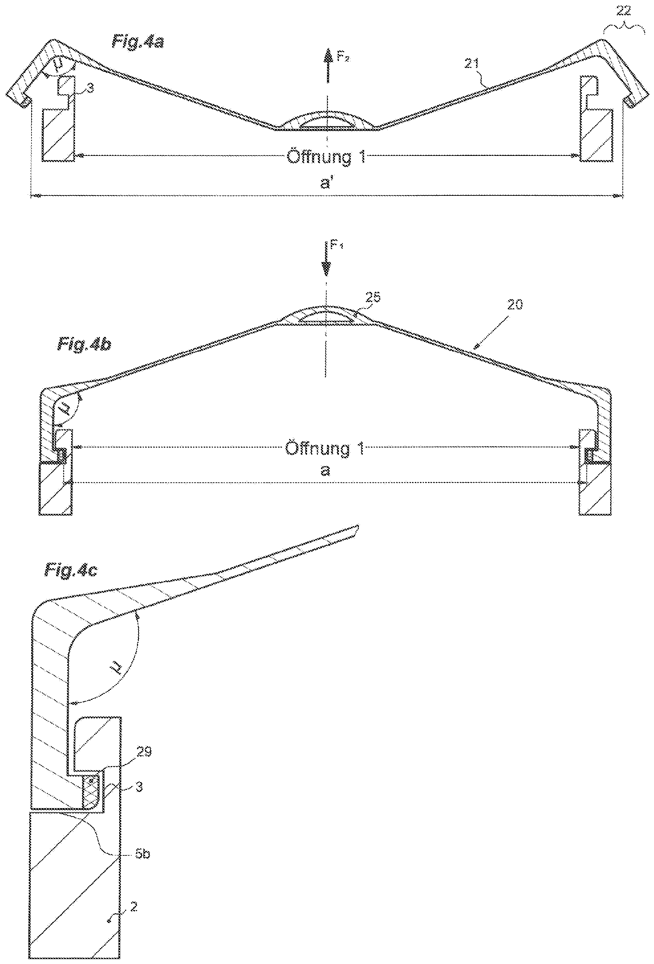

Bei dem in den Figuren 3 und 4 gezeigten zweiten Ausführungsbeispiel ist die erfindungsgemäße Abdeckung nicht mehr als ein von innen in die zu verschließende Öffnung eingreifender Deckel, sondern als eine die zu verschließende Öffnung 1 von außen umgreifende Kappe 20 ausgebildet. Die Figuren 3a bis 3f zeigen allesamt die Kappe 20 in ihrer konvexen, nach außen (d.h. entgegen der Aufsteckrichtung) gewölbten Schnappstellung, die sie in ihrer Verschlussposition einnimmt. In der Figur 3f ist zusätzlich dargestellt, wie in dieser Stellung ein Einrasten in die zu verschließende Öffnungswand 2 möglich ist, was aber in den Figuren 4a bis 4c noch genauer erläutert werden wird.

Wie schon bei dem Deckel 10 im ersten Ausführungsbeispiel weist die Kappe 20 eine im Wesentlichen kreis- oder scheibenförmige Stirnwand 21 auf, die in einen ringförmigen Randabschnitt 22 übergeht. Im Übergangsbereich zwischen Stirnwand 21 und Randabschnitt 22 sind wiederum, wie in den Figuren 3e und 3f zu sehen ist, Materialverdickungen vorgesehen, die dafür sorgen, dass der in den Figuren 3e und 3f eingezeichnete Winkel µ auch in der (in den Figuren 3a-f nicht gezeigten, aber in der Figur 4a dargestellten) konkaven Schnappposition konstant bleibt.

Außerdem weist der Randabschnitt 22 wieder umfangsseitig intermittierend angeformte Dehnungsabschnitte 24 auf, die sich äquidistant mit dazwischen angeordneten Zwischenabschnitten 23 abwechseln und aus der zweiten Materialkomponente geformt sind, die weicher ist als die für die Zwischenabschnitte 23 verwendete erste Materialkomponente. Wie schon beim ersten Ausführungsbeispiel sorgt das weichere Material der Dehnungsabschnitte 24 dafür, dass sich der Randabschnitt 22 in der konkaven, d.h. geöffneten Schnappposition der Kappe 20 in seinem Außenumfang vergrößern kann. Die Dehnungsabschnitte 24 würden dann nicht mehr die in den Figuren 3a und 3d gezeigte konstante Breite haben, sondern sich (ähnlich wie die in den Figuren 1a und 1d gezeigten Dehnungsabschnitte 14) radial nach außen verbreitern.

Anders als beim ersten Ausführungsbeispiel ist der Rastring 29 an einem um 90° radial nach innen vorspringenden Lippenabschnitt 23a, 24a des Randabschnitts 22 angeformt. Dies deshalb, weil die Kappe 20 die zu verschließende Öffnung 1 ja von außen umgreifen soll, wie in den Figuren 3f und insbesondere 4a-c genauer erläutert werden wird. Der an den Dehnungsabschnitt 24 angrenzende Lippenabschnitt 24a ist aus der weicheren zweiten Materialkomponente, während der an den Zwischenabschnitt 23 angrenzende Lippenabschnitt 23a aus der härteren ersten Materialkomponente ist. Es können aber auch die Lippenabschnitte 23a und 24a komplett aus der weicheren zweiten Materialkomponente geformt sein. Dann würde der gesamten radial nach innen verlaufenden Teil des Randabschnitts 22 zum Rastring 29 gehören bzw. der Lippenabschnitt (wie beim ersten Ausführungsbeispiel) entfallen.

Die Figuren 4a-c zeigen das Funktionsprinzip der Kappe 20 gemäß dem zweiten Ausführungsbeispiel in einem erfindungsgemäßen Verschluss-System. Die zu verschließende Öffnung 1 weist im dargestellten Wandabschnitt 2 außen eine kreisringförmige Nut 3 auf, an deren unterem Ende ein Absatz 5b gebildet ist, der aber nicht notwendig ist und auch entfallen kann. Fig. 4a zeigt die Kappe 20 in ihrer offenen, konkaven Stellung, d.h. mit nach unten gewölbter Stirnwand 21. Sie hat einen entsprechend vergrößerten Innendurchmesser a' des Randabschnitts 22. Dieser Innendurchmesser a' ist größer als der Außendurchmesser der Außennut 3, so dass sich die Kappe 20 in dem geöffneten Zustand der Figur 4a von der Öffnung 1 abnehmen lässt. Durch Ausüben einer entgegen der Aufsteckrichtung wirkenden Kraft F₂ auf die Stirnwand 21 (vorzugsweise durch Anheben des Griffelements 25), schnappt die Kappe 20 in ihren ersten bistabilen Zustand zurück, der auch in den Figuren 3a-f gezeigt ist.

Dann hat die Stirnwand 21 die in der Figur 4b gezeigte konvexe Krümmung, d.h. sie ist entgegen der Aufsteckrichtung nach oben gewölbt. Der Randabschnitt 22 mit dem nach innen ragenden Rastring 29 hat dann nur noch einen Innendurchmesser a, der geringer ist als der Außendurchmesser der Nut 3. Dadurch ist die Kappe 20 fest in Eingriff mit der zu verschließenden Öffnungswand 2 und schnappt erst bei Ausübung einer in Aufsteckrichtung wirkenden Kraft F₁ auf die Stirnwand 21 wieder in ihren zweiten bistabilen Zustand zurück.

Wie genauer in der Figur 4c dargestellt, führt der Rastring 29 aus der weicheren zweiten Materialkomponente zu einer fest klemmenden Befestigung des Randabschnitts 22 in der Außennut 3. Wegen der elastischen Materialeigenschaften des Rastrings 29 fungiert dieser außerdem als Dichtungsring, um ein Entweichen von Gasen oder Flüssigkeiten aus der Öffnung 1 zu unterbinden.

Die Figuren 5a-f sind im Wesentlichen so aufgebaut wie die Figuren 3a-f und zeigen eine Abdeckung 30, die gemäß einem dritten Ausführungsbeispiel der Erfindung sowohl als Kappe als auch als Deckel verwendbar ist. Im Unterschied zu der Kappe 20 gemäß dem zweiten Ausführungsbeispiel weist die Abdeckung 30 gemäß dem dritten Ausführungsbeispiel zusätzlich zu dem radial nach innen ragenden Rastring 39a noch einen radial nach außen ragenden Rastring 39b aus der weicheren zweiten Materialkomponente auf. Dies ist besonders gut in den Figuren 5e und 5f dargestellt und hat den Vorteil, dass die Abdeckung 30 nach den in den Figuren 2a-c und 4a-c erläuterten Prinzipien sowohl als Kappe (dann zeigt die Figur 5a die geschlossene Stellung) als auch als Deckel (dann zeigt die Figur 5a die offene Stellung) einsetzbar ist. Diese erfindungsgemäße Variante zeichnet sich also außerdem durch den Vorteil einer besonders vielseitigen Einsetzbarkeit aus.

Im dargestellten Ausführungsbeispiel weist der Randabschnitt 32 sowohl in seinen Dehnungsabschnitten 34 als auch in den Zwischenabschnitten 33 einen in radialer Richtung verlaufenden Lippenabschnitt 33a,b, 34a,b auf, der beiderseitig in den Rastringen 39a, 39b endet. Auch hier kann der Lippenabschnitt 33a,b aber auch aus der weicheren zweiten Materialkomponente gespritzt sein, wodurch sich der innere und der äußere Rastring 39a, 39b jeweils verbreitern. Dann würde der Rastring 39a, 39b jeweils direkt an den in Aufsteckrichtung verlaufenden Mittelabschnitt des Randabschnitts 32 anschließen.

**Bezugszeichenliste**

| | |
|---|---|
| 1 | Öffnung |
| 2 | Seitenwand |
| 3 | Außennut |
| 4 | Innennut |
| 5a,b | Absatz |
| 10, 20, 30 | Abdeckung |
| 11, 21, 31 | Stirnwand |
| 12, 22, 32 | Randabschnitt |
| 13, 23, 33 | Zwischenabschnitte (hart) |
| 14, 24, 34 | Dehnungsabschnitte (weich) |
| 15, 25, 35 | Griffelement |
| 23a, 33a | Lippenabschnitt innen (hart) |
| 24a, 34a | Lippenabschnitt innen (weich) |
| 33b | Lippenabschnitt außen (hart) |
| 34b | Lippenabschnitt außen (weich) |
| 19, 39b | Rastring außen (weich) |
| 29, 39a | Rastring innen (weich) |

## Patentansprüche

1. Abdeckung (10; 20; 30) zum Aufstecken auf eine zu verschließende Öffnung (1), mit
einer Stirnwand (11; 21; 31), die in bistabiler Weise zwischen einem ersten in Aufsteckrichtung gewölbten Zustand und einem zweiten entgegen der Aufsteckrichtung gewölbten Zustand verformbar ist, und
einem ringförmigen Randabschnitt (12; 22; 32), der in dem ersten bistabilen Zustand einen größeren Außenumfang aufweist als in dem zweiten bistabilen Zustand und daher dazu ausgelegt ist, eine klemmende Befestigung der Abdeckung (10; 20; 30) an einem Wandbereich (2) der Öffnung (1) zu bewirken, indem der Randabschnitt (12; 22; 32) in dem ersten Zustand innen oder in dem zweiten Zustand außen gegen den Wandbereich (2) drücken kann, wobei der Randabschnitt (12; 22; 32) wenigstens einen Dehnungsabschnitt (14; 24; 34) aufweist, der aus einer zweiten Kunststoff-Materialkomponente hergestellt ist, die weicher ist als eine erste Kunststoff-Materialkomponente aus der der übrige Randabschnitt (12; 22; 32) hergestellt ist, und die eine Vergrößerung des Randabschnitt-Außenumfangs in dem ersten bistabilen Zustand gegenüber dem zweiten bistabilen Zustand ermöglicht, **dadurch gekennzeichnet, dass** die Materialstärke am Übergang von der Stirnwand (11; 21; 31) in den Randabschnitt (12; 22; 32) zumindest in Teilbereichen größer ist als im übrigen Bereich der Abdeckung (10; 20; 30), oder
die Abdeckung (10; 20; 30) am Übergang von der Stirnwand (11; 21; 31) in den Randabschnitt (12; 22; 32) zumindest in Teilbereichen aus einer dritten Kunststoff-Materialkomponente hergestellt ist, die härter ist als die erste Kunststoff-Materialkomponente, aus der die übrige Stirnwand (11; 21; 31) zumindest vorwiegend besteht.

2. Abdeckung (10; 20; 30) nach Anspruch 1, die aus Kunststoff in einem Stück durch ein Spritzgussverfahren in Mehrkomponententechnik hergestellt ist.

3. Abdeckung (10; 20; 30) nach Anspruch 1 oder 2, wobei der Randabschnitt (12; 22; 32) mehrere Dehnungsabschnitte (14; 24; 34) aus der weicheren zweiten Kunststoff-Materialkomponente aufweist, die ausgehend vom Übergangsbereich zwischen dem Randabschnitt (12; 22; 32) und der Stirnwand (11; 21; 31) vorzugsweise radial schräg oder vertikal nach unten verlaufen und sich äquidistant mit Zwischenabschnitten (13; 23; 33) aus der härteren ersten Kunststoff-Materialkomponente des übrigen Randabschnitts (12; 22; 32) abwechseln.

4. Abdeckung (10; 20; 30) nach einem der vorstehenden Ansprüche, wobei die Materialstärke am Übergang von der Stirnwand (11; 21; 31) in den Randabschnitt (12; 22; 32) zumindest in Teilbereichen um ein Vielfaches höher als die minimale Materialstärke der Stirnwand (11; 21; 31) ist, insbesondere ca. drei bis vier Mal so groß.

5. Abdeckung (10; 20; 30) nach einem der Ansprüche 1 bis 3, die am Ubergang von der Stirnwand (11; 21; 31) in den Randabschnitt (12; 22; 32) zumindest in Teilbereichen aus der dritten Materialkomponente hergestellt ist, wobei die gesamte Abdeckung (10; 20; 30) eine im Wesentlichen einheitliche Materialstärke hat.

6. Abdeckung (10; 20; 30) nach einem der vorstehenden Ansprüche, wobei der gesamte Randabschnitt (12; 22; 32) im Wesentlichen die gleiche Dicke hat.

7. Abdeckung (20; 30) nach einem der vorstehenden Ansprüche, wobei der Randabschnitt (12; 22; 32) in und außerhalb des Bereichs mit dem Dehnungsabschnitt (24; 34) einen axial in Aufsteckrichtung verlaufenden Mittelabschnitt und einen daran angrenzenden und in radialer Richtung nach innen und/oder nach außen verlaufenden Lippenabschnitt (23a, 24a; 33a, 34a, 33b, 34b) aufweist.

8. Abdeckung (10; 20; 30) nach einem der vorstehenden Ansprüche, wobei am Endbereich des Randabschnitts (12; 22; 32) oder des Lippenabschnitts (23a, 24a; 33a, 34a, 33b, 34b) ein Rastring (19; 29; 39a, 39b) angeformt ist, der den Randabschnitt (12; 22; 32) umfangsseitig umgibt und ebenfalls aus einem Material gebildet ist, das weicher oder elastischer ist als die erste Kunststoff-Materialkomponente, und
der Rastring (19; 29; 39a, 39b) vorzugsweise aus der zweiten Kunststoff-Materialkomponente gebildet ist.

9. Abdeckung (30) nach Anspruch 7 oder einem von diesem abhängigen Anspruch, wobei sowohl ein radial nach innen verlaufender Lippenabschnitt (33a, 34a) als auch ein radial nach außen verlaufender Lippenabschnitt (33b, 34b) vorgesehen sind, die jeweils als Rastringe (39a, 39b) ausgebildet sind oder an denen radial nach innen bzw. außen ragende Rastringe (39a, 39b) angeformt sind.

10. Abdeckung (10; 20; 30) nach einem der vorstehenden Ansprüche, wobei die Stirnwand (11; 21; 31) ein entgegen der Aufsteckrichtung hervorragendes Griffelement (15; 25; 35) aufweist, das zum Aufstecken und Abziehen der Abdeckung (10; 20; 30) auf die bzw. von der Öffnung (1) dient und vorzugsweise als Bügelgriff ausgebildet ist.

11. Verschlusssystem mit der Abdeckung (10; 20; 30) nach einem der vorstehenden Ansprüche und
einer zu verschließenden Öffnung (1) eines Behälters oder dergleichen, an deren Wandbereich (2) die Abdeckung (10; 20; 30) klemmend zu befestigen ist,
wobei der Wandbereich (2) eine Nut (3; 4) zum Eingriff eines Klemmelements des Abdeckungs-Randabschnitts (12; 22; 32) aufweist, insbesondere des Rastrings (19; 29; 39a, 39b) gemäß einem der Ansprüche 8 bis 10.

## Claims

1. A cover (10; 20; 30) for attachment to an opening (1) to be closed, comprising
a front wall (11; 21; 31) which is bistably deformable between a first state which is cambered in the direction of attachment and a second state which is cambered opposite to the direction of attachment, and
an annular edge portion (12; 22; 32) having a larger outer circumference in the first bistable state than in the second bistable state and therefore being adapted to effect a clamping attachment of the cover (10; 20; 30) to a wall region (2) of the opening (1) by pressing the edge portion (12; 22; 32) in the first state from inside or in the second state from outside against the wall region (2),
wherein the edge portion (12 22; 32) has at least one expansion portion (14; 24; 34) made of a second plastic material component which is softer than a first plastic material component from which the remaining edge portion (12; 22; 32) is made, and which enables an increase of the outer periphery of the edge portion in the first bistable state relative to the second bistable state,
**characterised in that**
the material thickness at the transition portion from the front wall (11; 21; 31) into the edge portion (12; 22; 32) is at least in partial areas greater than in the remaining area of the cover (10; 20; 30), or
the cover (10; 20; 30) is produced at the transition portion from the front wall (11; 21; 31) into the edge portion (12; 22; 32) at least in partial areas of a third plastic material component, which is harder than the first plastic material component from which the remaining front wall (11; 21; 31) at least predominantly consists.

2. The cover (10; 20; 30) of claim 1, integrally made of plastic material by a multi-component injection molding process.

3. The cover (10; 20; 30) of claim 1 or 2, wherein said edge portion (12; 22; 32) comprises a plurality of expansion portions (14; 24; 34) made of said softer second plastic material component which extend from said transition portion between said edge portion (12; 22; 32) and said front wall (11; 21; 31) preferably radially obliquely or vertically downwards and which alternate equidistantly with intermediate portions (13; 23; 33) of the harder first plastic material component of the remaining edge portion (12; 22; 32).

4. The cover (10; 20; 30) of any preceding claim, wherein the material thickness at the transition portion from the front wall (11; 21; 31) into the edge portion (12; 22; 32) is at least in partial areas by a multiple greater than the minimum material thickness of the front wall (11; 21; 31), in particular about three to four times as large.

5. The cover (10; 20; 30) of any of claims 1 to 3, which is produced at the transition portion from the front wall (11; 21; 31) into the edge portion (12; 22; 32) at least in partial areas of the third material component, wherein the entire cover (10; 20; 30) has a substantially uniform material thickness.

6. The cover (10; 20; 30) of any preceding claim, wherein the entire edge portion (12; 22; 32) has substantially the same thickness.

7. The cover (10; 20; 30) of any preceding claim, wherein the edge portion (12; 22; 32) has, inside and outside of the region with the expansion portion (24; 34), a middle portion axially extending in the direction of attachment and, adjacent thereto, a lip portion (23a, 24a, 33a, 34a, 33b, 34b) extending in a radial direction inwardly and/or outwardly.

8. The cover (10; 20; 30) of any preceding claim,
integrally provided at the end region of the edge portion (12; 22; 32) or the lip portion (23a, 24a; 33a, 34a, 33b, 34b) with a latching ring (19; 29; 39a, 39b) which peripherally surrounds the edge portion (12; 22; 32) and is also formed of a material which is softer or more elastic than the first plastic material component, and
wherein the latching ring (19; 29; 39a, 39b) is preferably made of the second plastic material component.

9. The cover (30) of claim 7 or any claim dependent thereon, wherein both a radial-inwardly extending lip portion (33a, 34a) and a radial-outwardly extending lip portion (33b, 34b) are provided, which are both formed as latching rings (39a, 39b) or on which radial-inwardly or radial-outwardly projecting latching rings (39a, 39b) are integrally formed.

10. The cover (10; 20; 30) of any preceding claim, wherein the front wall (11; 21; 31) has a handle member (15; 25; 35) protruding in a direction opposite to the direction of attachment, being arranged for attaching and detaching the cover (10; 20, 30) on or from the opening (1) and being preferably formed as a bow-shaped handle.

11. A closing system comprising
the cover (10; 20; 30) of any preceding claim, and
an opening (1) of a container or the like to be closed by clamping the cover (10; 20; 30) to the wall region (2) thereof,
wherein the wall region (2) has a groove (3; 4) for engaging a clamping element of the cover edge portion (12; 22; 32), in particular the latching ring (19; 29; 39a, 39b) according to one of claims 8 to 10.

## Revendications

1. Couvercle (10 ; 20 ; 30) destiné à être placé sur une ouverture (1) à obturer, comprenant
une paroi frontale (11 ; 21 ; 31), qui peut être déformée de manière bistable entre un premier état bombé dans la direction de placement et un second état bombé à l'encontre la direction de placement, et
une partie marginale annulaire (12 ; 22 ; 32) qui présente dans le premier état bistable une périphérie extérieure plus grande que dans le second état bistable et est donc conçue pour obtenir une fixation par blocage du couvercle (10 ; 20 ; 30) au niveau d'une zone de paroi (2) de l'ouverture (1) par le fait que la partie marginale (12 ; 22 ; 32) dans le premier état intérieur ou dans le second état extérieur peut pousser contre la zone de paroi (2),
dans lequel la partie marginale (12 ; 22 ; 32) présente au moins une partie d'extension (14 ; 24 ; 34) qui est fabriquée à partir d'un deuxième composant en matière plastique qui est plus mou qu'un premier composant en matière plastique à partir duquel le reste de la partie marginale (12 ; 22 ; 32) est fabriqué, et qui permet d'augmenter la périphérie extérieure de la partie marginale dans le premier état bistable par rapport au second état bistable, **caractérisé en ce que**
l'épaisseur de matière au niveau de la jonction de la paroi frontale (11 ; 21 ; 31) dans la partie marginale (12 ; 22 ; 32) est au moins dans des zones partielles plus grande que dans le reste de la zone du couvercle (10 ; 20 ; 30), ou
le couvercle (10 ; 20 ; 30) au niveau de la jonction de la paroi frontale (11 ; 21 ; 31) dans la partie marginale (12 ; 22 ; 32) est au moins dans des zones partielles fabriqué à partir d'un troisième composant en matière plastique qui est plus dur que le premier composant en matière plastique à partir duquel le reste de la paroi frontale (11 ; 21 ; 31) est composé au moins de manière prépondérante.

2. Couvercle (10 ; 20 ; 30) selon la revendication 1, qui est fabriqué en une pièce à partir d'une matière plastique selon un procédé de moulage par injection par une technique à plusieurs composants.

3. Couvercle (10 ; 20 ; 30) selon la revendication 1 ou 2, dans lequel la partie marginale (12 ; 22 ; 32) présente plusieurs parties d'extension (14 ; 24 ; 34) constituées du deuxième composant en matière plastique plus mou et qui s'étendent, à partir de la zone de jonction entre la partie marginale (12 ; 22 ; 32) et la paroi frontale (11 ; 21 ; 31), de préférence radialement de manière inclinée ou verticalement vers le bas et alternent de manière équidistante avec des parties intermédiaires (13 ; 23 ; 33) constituées du premier composant en matière plastique plus dur du reste de la partie marginale (12 ; 22 ; 32).

4. Couvercle (10 ; 20 ; 30) selon une des revendications précédentes, dans lequel l'épaisseur de matière au niveau de la jonction de la paroi frontale (11 ; 21 ; 31) dans la partie marginale (12 ; 22 ; 32) est au moins dans des zones partielles beaucoup plus large que l'épaisseur de matière minimale de la paroi frontale (11 ; 21 ; 31), en particulier environ trois à quatre fois plus grande.

5. Couvercle (10 ; 20 ; 30) selon une des revendications 1 à 3, qui est fabriqué au niveau de la jonction de la paroi frontale (11 ; 21 ; 31) dans la partie marginale (12 ; 22 ; 32) au moins dans des zones partielles à partir du troisième composant, dans lequel l'ensemble du couvercle (10 ; 20 ; 30) a une épaisseur de matière sensiblement homogène.

6. Couvercle (10 ; 20 ; 30) selon une des revendications précédentes, dans lequel l'ensemble de la partie marginale (12 ; 22 ; 32) a sensiblement la même épaisseur.

7. Couvercle (20 ; 30) selon une des revendications précédentes, dans lequel la partie marginale (12 ; 22 ; 32) présente dans la zone avec la partie d'extension (24 ; 34) et à l'extérieur de celle-ci une partie médiane s'étendant axialement dans la direction de placement et une partie de lèvre (23a, 24a ; 33a, 34a, 33b, 34b) adjacente à celle-ci et s'étendant dans la direction radiale vers l'intérieur et/ou vers l'extérieur.

8. Couvercle (10 ; 20 ; 30) selon une des revendications précédentes dans lequel,
au niveau de la zone d'extrémité de la partie marginale (12 ; 22 ; 32) ou de la partie de lèvre (23a, 24a ; 33a, 34a, 33b, 34b), un anneau d'encliquetement (19 ; 29 ; 39a, 39b) est formé et entoure la partie marginale (12 ; 22 ; 32) sur le côté circonférentiel, étant également constitué d'une matière qui est plus molle ou plus élastique que le premier composant en matière plastique, et
l'anneau d'encliquetement (19 ; 29 ; 39a, 39b) est de préférence constitué du deuxième composant en matière plastique.

9. Couvercle (30) selon la revendication 7 ou une revendication dépendante de celle-ci, dans lequel à la fois une partie de lèvre (33a, 34a) s'étendant radialement vers l'intérieur et une partie de lèvre (33b, 334b) s'étendant radialement vers l'extérieur sont prévues et conçues respectivement sous la forme d'anneaux d'encliquetement (39a, 39b) ou au niveau desquelles sont formés des anneaux d'encliquetement (39a, 39b) faisant saillie radialement vers l'intérieur ou l'extérieur.

10. Couvercle (10 ; 20 ; 30) selon une des revendications précédentes, dans lequel la paroi frontale (11 ; 21 ; 31) présente un élément de poignée (15 ; 25 ; 35) qui fait saillie à l'encontre de la direction de placement et qui sert à placer le couvercle (10 ; 20 ; 30) sur l'ouverture (1) respectivement à l'enlever de celle-ci et est de préférence conçu comme une poignée en forme d'étrier.

11. Système d'obturation, comprenant
le couvercle (10 ; 20 ; 30) selon une des revendications précédentes et
une ouverture (1) d'un récipient ou équivalent à obturer, le couvercle (10 ; 20 ; 30) devant être fixé par blocage au niveau sa zone de paroi (2),
dans lequel la zone de paroi (2) présente une rainure (3 ; 4) pour engrener un élément de blocage de la partie marginale de couvercle (12 ; 22 ; 32), en particulier de l'anneau d'encliquetement (19 ; 29 ; 39a, 39b) selon une des revendications 8 à 10.
